# EUROPÄISCHE PATENTSCHRIFT

(11) **EP 2 114 702 B1**
(45) Veröffentlichungstag und Bekanntmachung des Hinweises auf die Patenterteilung: **17.07.2013**
(21) Anmeldenummer: 07857052.0
(22) Anmeldetag: 21.12.2007
(51) Int. Cl.: B60C 25/138

(54) **MONTAGEVORRICHTUNG UND VERFAHREN ZUR MONTAGE UND DEMONTAGE EINES FAHRZEUGREIFENS AUF EINER FELGE**
MOUNTING DEVICE, AND METHOD FOR MOUNTING AND DISMOUNTING A VEHICLE TIRE ON AND FROM A RIM
DISPOSITIF DE MONTAGE ET PROCÉDÉ DE MONTAGE ET DE DÉMONTAGE D'UN PNEUMATIQUE DE VÉHICULE SUR UNE JANTE

(30) Priorität: 04.01.2007 DE 102007001628
(43) Veröffentlichungstag der Anmeldung: 11.11.2009
(73) Patentinhaber: Robert Bosch GmbH, 70442 Stuttgart (DE)
(72) Erfinder: Immler, Michael, 87509 Immenstadt (DE)
(86) Internationale Anmeldenummer: PCT/EP2007/011337
(87) Internationale Veröffentlichungsnummer: WO 2008/080584

(56) Entgegenhaltungen:
- EP-A- 0 947 360
- EP-A- 1 167 089
- EP-A- 1 625 954
- EP-A- 1 738 937
- WO-A-02/055325
- US-A- 2 704 570
- US-A- 2 873 777
- US-A- 4 462 451
- US-A- 5 339 880
- US-B1- 6 192 959

## Beschreibung

Die Erfindung betrifft ein Montagesystem zur Montage beziehungsweise Demontage eines Fahrzeugsreifens auf eine Felge, wobei die Felge auf einem Montagetisch aufliegt und ein Niederdrücker für das Aufschieben des Fahrzeugreifens auf die Felge vorgesehen ist. Des Weiteren betrifft die Erfindung ein Verfahren zur Montage beziehungsweise Demontage eines Fahrzeugreifens.

Die bekannten Montagevorrichtungen montieren einen Reifen in der Weise auf eine Felge, dass der Wulst bei einer Drehbewegung der Felge unter das Felgenhorn der Felge gedrückt wird. Ein Niederhalter ist während der Montage dann ortsfest und quetscht den in Umfangsrichtung noch außerhalb der Felge befindlichen Felgenwulst durch die Drehbewegung über das Felgenhorn in die Felge. Derartige Vorrichtungen werden unter Anderem durch die EP 0 947 360, die EP 1 167 089 und US 6,192,959 gezeigt.

Da natürlich der Durchmesser des Wulstes des Fahrzeugreifens geringer ist wie der Durchmesser der Felge, wird am Ende oftmals mit großer Kraft und mit scharfen Werkzeugen versucht, den Reifenwulst über das Felgenhorn zu hebeln.

Dies führt oftmals zu Beschädigungen des Reifens und/oder der Felge, die vielleicht bei der Montage nicht sichtbar sind, aber zum Beispiel die Reifen im Einsatz nachhaltig schädigen können. Die US 2, 873, 777 bildet die bekannten Vorrichtungen dahingehend weiter, dass der Wulst zumindest teilsweise in ein Felgenbett gezogen wird, sodass das Hebeln des verbleibenden Wulstes über das Felgenhorn leichter durchgeführt werden kann.

In der EP 1738937 A2 wird ein gattungsbildendes Verfahren zur Montage eines Luftreifens auf enie Tiefbeltfelge eines Fahrzeugrades gezeigt. Die hierzu geeignete vorrichtung umfaßt eine Handhabungseinrichtung mit einem in drei Richtungen bewegbaren Gelenkarun.

Bei hohen Belastungen, zum Beispiel bei hoher Geschwindigkeit verlieren diese Reifen dann Luft oder Läsen sich von der Felge. Ursache hiervon sind dabei diese Montagebeschädigungen.

Es ist Aufgabe der Erfindung, den Stand der Technik derart zu verbessern, dass der Reifen bei der Montage keine Beschädigung erfährt.

Zur Lösung dieser Aufgabe geht die Erfindung aus von einem Montagesystem mit einer Montagevorrichtung, wie eingangs beschrieben, und schlägt vor, dass eine Bewegung des Niederdrückers, die im Wesentlichen parallel ist zur Reifenachse, für das Aufschieben des Fahrzeugreifens auf die Felge oder das Abziehen des Fahrzeugreifens von der Felge vorgesehen ist.

Im Gegensatz zu den auf dem Markt befindlichen Montagemaschinen, bei denen der Reifen in den meisten Fällen durch Drehen des Montagetellers und Montieren der Wulst durch einen Montagekopf erfolgt, wird bei der erfindungsgemäßen Montagevorrichtung der Reifen in einer Drehrichtung nicht bewegt. Des Weiteren ist bei der Bewegung des Niederdrückers für das Aufschieben oder Abziehen des Fahrzeugreifens von der Felge Keine oder nur eine minimalste Bogenbewegung vorgesehen.

Erreicht wird dies dadurch, dass ein Teil des Wulstes bei der Montage des Reifens schon über das Felgenhörn in die Felge eingelegt ist und sich dort in einen Bereich mit geringerem Durchmesser, dem sogenannten Tiefbett der Felge, befindet. Dieser Bereich mit geringerem Durchmesser erlaubt es, auf dem diesen Bereich gegenüberliegenden Bereich der Felge den Wulst soweit in radialer Richtung nach außen zu bewegen, dass dieser mit geringer Kraft über das Felgenhorn in die Felge geschoben werden kann. Die hier notwendige Bewegung des Niederdrückers ist parallel zur Radachse beziehungsweise hierzu spitzwinklig. Auch ein gewisser spitzer Winkel zählt insofern noch als im Wesentlichen parallel der Bewegung zur Reifenachse im Sinne der Erfindung. Wesentlich ist, dass zwischen dem Niederdrücker und der Felge keine relative Drehbewegung erfolgt, die zu den Beschädigungen des Reifens führen, da der Niederdrücker gerade hierbei im Wulstbereich den Reifen beschädigt.

In diesem Zusammenhang wird als Reifenachse die Rotationsachse des Komplettrades verstanden. Erfindungsgemäß bezieht sich die Montagevorrichtung auf einen Fahrzeugreifen, wobei der Begriff Fahrzeug ebenfalls sehr weit auszulegen ist, denn auch das Fahrgestell eines Flugzeuges dient insofern als Fahrzeug.

In einer bevorzugten Ausgestaltung der erfindungsgemäßen Montagevorrichtung ist vorgesehen, dass die Montagevorrichtung eine im Wesentlichen parallel zur Reifenachse orientierte Stütze aufweist, die neben dem auf dem Montagetisch aufliegenden Rad angeordnet ist und die Stütze den Niederdrücker trägt.

Alternativ hierzu ist vorgesehen, dass die Montagevorrichtung einen Aufnahmedorn zur Aufnahme der Felge aufweist und auf den Aufnahmedorn eine Stütze für den Niederdrücker befestigbar ist.

Bei der zuerst genannten Variante befindet sich der Niederdrücker an einer an der Montagevorrichtung fest angeordneten

Stütze. Diese Stütze befindet sich neben dem auf dem Montagetisch aufliegenden Rad. Bei der anderen Variante wird die Stütze als zusätzlich montierbares Element an der Montagevorrichtung aufgebaut.

Da der Niederdrücker während des Montage- beziehungsweise Demontagevorganges eine aktive Bewegung, die im Wesentlichen parallel zur Reifenachse ist, ausführt, muss natürlich die Anordnung der Stütze mechanisch ausreichend stabil sein. Daher besitzt zum Beispiel der Aufnahmedorn ein entsprechendes Gewinde, auf welches die Stütze dann mit einem dazu korrespondierenden Gewinde aufschraubbar ist und einen festen Sitz erfährt.

Der Aufnahmedorn durchdringt die Felge mittig, um die Felge beziehungsweise das Rad auf den Montagetisch auszurichten und dann mit einem entsprechenden Befestigungsmittel, zum Beispiel einer Mutter oder ähnlichem, zu befestigen.

Bezogen auf den auf dem Montagetisch für Montage- beziehungsweise Demontagezwecke eingespannten Felge beziehungsweise Komplettrad erstreckt sich die Stütze in einer im Wesentlichen zur Radachse parallelen Richtung. Der Niederdrücker befindet sich an einem Tragarm, der an der Stütze angeordnet ist.

Für Einstellzwecke ist der Tragarm an der Stütze drehbar gelagert. Auch die Position des Niederdrückers auf den Tragarm oder aber die wirksame Länge des Tragarmes ist veränderbar, sodass der Niederdrücker in der jeweiligen richtigen Position an den Fahrzeugreifen anstellbar ist. Insbesondere ist der Tragarm auf die jeweiligen Durchmesser des Fahrzeugreifens einstellbar.

In einer bevorzugten Variante der Erfindung ist ein elektrisch, hydraulisch oder pneumatisch wirkender Antrieb des Niederdrückers vorgesehen. Durch diesen Antrieb erfährt der Niederdrücker die Bewegung in eine Richtung, die im Wesentlichen parallel ist zur Reifenachse, um den Reifenwulst über das Felgenhorn zu drücken. Geschickterweise wird dieser Antrieb mit einem Fußschalter aktiviert.

Natürlich ist es auch möglich, den Niederdrücker händisch, mechanisch zu betätigen, zum Beispiel mit Hilfe eines entsprechenden Hebelmechanismus oder eines Getriebes.

Das erfindungsgemäße Montagesystem umfasst eine Montagevorrichtung, wie eingangs beschrieben, einen Montagetisch sowie eine Schubvorrichtung. Die Schubvorrichtung versetzt den auf einer Felge zu montierenden Fahrzeugreifen bezüglich der Felge radial derart, dass ein Teil des Wulstes, welcher auf der Felge ist, in das Tiefbett der Felge gelangt. Diese radiale Bewegung ist für den Fahrzeugreifen unschädlich, das heißt er erleidet dabei keine Beschädigungen. Durch den radialen Versatz gelangt der Wulstbereich, der noch nicht auf der Felge ist, in radialer Richtung so weit über das oder an das Felgenhorn, dass der Wulst dann mit Hilfe der Bewegung des Niederdrückers über das Felgenhorn in für den Reifen ebenfalls schonender Weise geschoben wird. Dabei ist die Bewegungsrichtung des Niederdrückers rechtwinklig zur Felge und somit parallel zur Radachse. Es ist klar, dass die Erfindung auch mit einem hierzu spitzen Winkel ebenfalls funktioniert.

Erfindungsgemäß wird bei dem Montagesystem eine radiale Bewegung beziehungsweise Versatzbewegung des Fahrzeugsreifens relativ zur Felge vorgeschlagen, wobei diese natürlich entweder durch eine Schubbewegung des Fahrzeugreifens zur Felge oder umgekehrt des festgehaltenen Fahrzeugreifens zur bewegten Felge erfolgen kann. Die Schubbewegung muss zumindest einen bezüglich der kreisrunden Felge radialen Anteil aufweisen, das heißt die Schubrichtung kann auch wiederum zur Felgenebene geneigt orientiert sein, um erfindungsgemäß zu wirken.

Im erfindungsgemäßen Montagesystem ist vorgesehen, dass durch die Schubvorrichtung in einer Reifenposition des Fahrzeugreifens eine Schubkraft in den Fahrzeugreifen eingeprägt wird und so der Wulst des Fahrzeugreifens in das Tiefbett der Felge gedrückt wird und an einer von der Reifenposition entfernten, am Fahrzeugreifen bevorzugt diametral zur Reifenposition gelegenen Stelle der Niederdrücker den Wulst durch eine zur Radachse parallele oder spitzwinklige Bewegung über das Felgenhorn auf die Felge drückt.

Die bei dem erfindungsgemäßen Montagesystem vorgeschlagene Schubvorrichtung ist in einer ersten erfindungsgemäßen Variante zum Beispiel als radial beziehungsweise mit radialer Bewegungskomponente ausgebildeter, zum Beispiel pneumatisch oder hydraulisch bewegbarer Stempel realisiert, der auf die Lauffläche des Fahrzeugreifens wirkt. Dabei besitzt der Stempel eine kreissegmentartige, der Lauffläche angepasste Stirnfläche, um die Schubkraft flächig auf den Fahrzeugreifen einzubringen und so auf einen größeren Bereich des bereits auf der Felge liegenden Wulstes in das Tiefbett der Felge zu drücken.

Eine andere erfindungsgemäße Variante sieht vor, dass die Schubvorrichtung durch einen, insbesondere durch eine Spannvorrichtung spannbaren Gurt gebildet ist, wobei der Gurt während der Montage entlang der Lauffläche des Fahrzeugreifens, zumindest teilweise auf der Lauffläche anliegt und gespannt ist. Der Gurt liegt bei dieser erfindungsgemäßen Variante zumindest teilweise in Umfangsrichtung der Lauffläche auf dieser auf und bewirkt dann durch die Spannvorrichtung zumindest eine bezüglich der Felge radiale Kraftkomponente, die bewirkt, dass der Wulst in das Tiefbett der Felge gedrückt oder geschoben wird.

Zu beachten ist dabei, dass durch den Gurt in sehr homogener

Weise eine Schubkraft in den Fahrzeugreifen einbringbar ist. Dabei liegt der Gurt in einem großen Umfangswinkelbereich auf der Lauffläche auf und der ausweichende Reifen kann, in dem Bereich wo der Gurt an ihm anliegt, nicht ausweichen. Der gesamte Versatz des Fahrzeugreifens konzentriert sich in dem Bereich, in welchem der Gurt, zum Beispiel weil dort auch die Spannvorrichtung vorgesehen ist, nicht an der Lauffläche aufliegt. Es resultiert daher eine sehr effektive Schubvorrichtung. Durch einen Austausch des Gurtes ist auch die Anordnung auf verschiedene Reifenbreiten anpassbar.

In einer bevorzugten Variante der Erfindung umfasst das Montagesystem auch einen Niederhalter, durch welchen der Wulst während der Montage im Tiefbett gehalten ist. Dabei beansprucht die Erfindung nicht nur Schutz für den Niederhalter in Kombination mit dem erfindungsgemäßen Montagesystem, sondern auch für den Niederhalter allein. Dabei wird geschickterweise vorgeschlagen, dass zumindest der mit dem Fahrzeugreifen zusammenwirkende Bereich des Niederhalters aus einem Kunststoff oder Gummimaterial besteht.

Dabei ist vorgesehen, dass der gesamte Niederhalter zum Beispiel aus einem Kunststoff- oder Gummimaterial besteht, oder nur der mit dem Reifen zusammenwirkende Bereich des Niederhalters.

In einer weiteren Variante trägt der Niederhalter einen entsprechenden Überzug aus Kunststoff- oder Gummimaterial und ist im Übrigen zum Beispiel aus einem Metall gefertigt, um ausreichend stabil zu sein.

Geschickterweise ist der Niederhalter als Handwerkzeug ausgebildet, der dann in der Montage des Fahrzeugsreifens von dem Monteur gehalten und eingesetzt wird. Es ist aber auch möglich, dass der Niederhalter als Teil des Montagesystems, zum Beispiel an dem Montagesystem oder an der Montagevorrichtung an einer entsprechend beweglichen Galgen oder Tragarm vorgesehen ist und so in geeigneter Weise an den Fahrzeugreifen beziehungsweise die Felge anstellbar ist, um den Reifenwulst im Tiefbett zu halten. Dabei ist der Niederhalter keilartig ausgebildet, um mit seinem keilartigen Ende den Wulst in das Tiefbett zu schieben.

Des Weiteren ist es möglich, dass der Niederhalter ebenfalls elektrisch, pneumatisch oder hydraulisch angetrieben ist beziehungsweise von einem Gestell getragen ist, das ausreichend stabil ist, um die Reaktionskräfte aufnehmen zu können.

Auch ist es günstig, dass der Niederhalter im vorderen Bereich dem Radius des Felgenhorns beziehungsweise des Tiefbettes im Wesentlichen beziehungsweise weitgehend entspricht.

Dadurch wird erreicht, dass der Niederhalter über einen größeren Bereich schonend mit dem Wulst zusammenwirkt und auch entlang eines größeren Bogensegmentes den Wulst in das Tiefbett zu drücken vermag. Geschickterweise wird dabei die Ausgestaltung des vorderen Bereichs mit einem Radius ausgestattet, der dem Felgenhorn beziehungsweise dem Tiefbett, also dem in diesem Bereich bestehenden Radien angepasst ist und so die Montage in idealer Weise unterstützt.

Das erfindungsgemäß vorgeschlagene Verfahren zur Montage eines Fahrzeugreifens auf eine Felge, wobei sich ein Fahrzeugreifen zumindest teilweise auf der Felge befindet, indem ein Wulst sich zumindest teilweise über dem Felgenhorn befindet, zeichnet sich dadurch aus, dass der Fahrzeugreifen durch eine Schubvorrichtung relativ derart radial zu der Felge versetzt wird, dass ein Teil des Wulstes in das Tiefbett der Felge hineingedrückt wird und hernach der noch vor dem Felgenhorn befindliche Wulstbereich durch eine im Wesentlichen rechtwinklige Bewegung, bezogen zur Felge, über das Felgenhorn in die Felge hineingedrückt wird.

In einer bevorzugten Ausgestaltung des Verfahrens wird dabei als Schubvorrichtung ein Gurt längs der Lauffläche des Fahrzeugreifens, zumindest entlang eines Teils der Lauffläche angeordnet und gespannt.

Dabei ist zu beachten, dass es nach dem erfindungsgemäßen Verfahren auf den unteren oder oberen Wulst des Reifens nicht ankommt. Das erfindungsgemäße Verfahren ist für beide Wulste verwendbar. Daher wird für die Montage eines Fahrzeugreifens das Verfahren gegebenenfalls zweimal hintereinander durchgeführt, nämlich zunächst für den unteren und dann für den oberen Wulst.

Dabei ist erkannt worden, dass durch das gezielte Hineindrücken des Wulstes in das Tiefbett, der Fahrzeugreifen radial soweit versetzt wird, dass er in der Reifenposition gegenüberliegenden oder entfernten Stelle nur noch mit geringem Kraftaufwand der Wulst über das Felgenhorn gedrückt werden muss, ohne den Reifen zu verletzen.

Dabei stellt die Erfindung gegebenenfalls durch den Einsatz des Niederhalters sicher, dass der auf der Felge liegende Wulst auch während der Montage im Tiefbett verbleibt und nicht wieder herausgleitet, was aufgrund der Geometrie erfolgen kann. Es ist nämlich zu beachten, dass bezogen auf die Ebene der Felge der zu montierende Fahrzeugreifen ja gekippt auf die Felge gestülpt wird, damit ein Teil des Wulstes auf der Felge zu liegen kommt, der andere Bereich aber noch über das Felgenhorn gezogen werden muss. Das bedeutet natürlich auch, dass nicht der gesamte auf der Felge anliegende Wulstbereich sich im Tiefbett befinden kann, sondern teilweise auch herausgleiten kann. Dieses Herausgleiten wird durch einen Einsatz des Niederhalters gegebenenfalls vermieden. Dabei ist zu beachten, dass der Einsatz des Niederhaltes erfindungsgemäß und optional nicht zwingend vorgesehen ist. Auch die Ausgestaltung des Tiefbettes, welche als Nut im Felgenbett ausgeprägt ist, unterstützt in geeigneter Weise das Halten des Wulstes im Tiefbett.

Dabei ist zu beachten, dass nachdem der Reifenwulst vollständig über das Felgenhorn gezogen ist, der Durchmesser des kreisrunden Reifenwulstes größer ist wie der Durchmesser des Tiefbettes beziehungsweise des Felgenbettes und daher der Wulst problemlos aus dem Tiefbett heraus gelangt und sich innen am Felgenhorn anlegt.

Die Montage des Reifens auf die Felge erfolgt mittels eines Gurtes und eines Niederdrückers, welcher den Reifen über das Felgenhorn auf die Felge drückt. Durch diese neue Art der Reifenmontage insbesondere auf einteilige Tiefbettfelgen werden die typischen Montagemarkierungen und Montageschäden vermieden.

Dabei ist zu beachten, dass die Erfindung nicht nur bei sogenannten Tiefbettfelgen einsetzbar ist, sondern natürlich auch bei allen anderen Felgen verwendbar ist, deren Felgenbett einen ausreichend geringen Durchmesser aufweisen, ohne jetzt ein nutartiges Tiefbett zu besitzen.

Das Abdrücken des entlüfteten Reifens von der Felge erfolgt mit handelsüblichen Systemen, ist aber auch mit der erfindungsgemäßen Vorrichtung möglich.

Die Demontage erfolgt mittels eines Hebels, welcher die vorgespannte Wulst über das Felgenhorn hebt.

Die Spannung der Felge auf die Montagevorrichtung beziehungsweise dem Montagetisch kann mittels, wie bei der Montage mittels handelsüblichen Vorrichtungen erfolgen.

Eine beispielhafte erfindungsgemäße Montagevorrichtung besteht im wesentlichen aus folgenden Bauteilen.
1. Montagetisch mit Einspannvorrichtung zum Fixieren der Felge:
   Das Rad / die Felge wird auf einem Montagetisch durch Spannklauen oder eine Betätigungsvorrichtung aufgespannt.
      Dieser Montagetisch ist entweder waagerecht oder in einem Winkel bis zu ca. 30° gebaut.
      Das Spannen der Felge erfolgt mit Spannklauen über:
      a. durch mechanisches Spannen mittels Spindel oder einer Befestigungsmutter, die auf einen Positionsdorn aufgeschraubt wird
      b. durch druckbegrenzte, elektrisch angetriebene Spindel
      c. durch druckbegrenztes, pneumatisches Spannen mittels Kolben
2. Fest in einem geschlitzten Zylinder fixierter, an die Vorrichtung angebrachter, beweglicher Gurt zur Montage des Reifens auf die Felge und Demontage des Reifens von der Felge:
   Der Gurt, welcher den Montagevorgang des Reifens durchführt ist an der Montagevorrichtung fest angebracht. Der Gurt kann in endlicher oder endloser Ausführung angebracht sein. Während des Montagevorgangs wird der Gurt gespannt, um den Reifen auf die Felge zu montieren.
   Diese Spannung des Gurtes erfolgt:
      a. durch einen fixierten, geschlitzten Zylinder, welcher durch eine Ratsche gedreht wird. Bei diesem Vorgang wird der Gurt durch Aufrollen gespannt.
      b. durch einen fixierten, geschlitzten Zylinder, welcher durch einen Elektromotor gedreht wird. Bei diesem Vorgang wird der Gurt durch Aufrollen gespannt.
      c. durch einen pneumatisch oder hydraulisch angesteuerten Kolben, welcher den Gurt in Richtung von dem Reifen weg drückt. Durch diese Bewegung wird der Gurt gespannt.
      d. alternativ wird der Gurt durch das Wegfahren des Montagetisches von der Gurtfixierung weg, gespannt
3. einem Niederhalter zum Fixieren der oberen Wulst während der Montage.
   Dieser Niederhalter aus einem Kunststoffmaterial ist annähernd dem Radius des Felgenhorns nachgebildet und hält die (obere) Reifenwulst während der Gurtmontage im Tiefbett.
4. einem Montagehebel zum Eindrücken der oberen Wulst in das Felgenbett während der Montage
   Dieser Hebel, welcher mit einer geformten Niederdrückvorrichtung versehen ist, drückt die obere Wulst schonend und ohne sie zu verletzen in das Felgenbett.
   Bei der Demontage wird der Hebel, an dem auch ein Demontagefinger angebracht ist eingesetzt. Dabei wird mittels dieses Hebels die Wulst über das Felgenhorn gehoben und demontiert.
5. einer Abdrückvorrichtung zum Abdrücken beider Wulste vom Felgenhorn weg, über den Hump in das Tiefbett
   Hier wird eine herkömmliche Abdrückvorrichtung mittels wegebegrenzter Abdrückschaufel oder einer Abrollvorrichtung, welche die Wulst von der Felge drückt, eingesetzt.

Es ist klar, dass das vorbeschriebene Ausführungsbeispiel nur eine von vielen Ausgestaltungen der erfindungsgemäßen Montagevorrichtung beziehungsweise des erfindungsgemäßen Montagesystems darstellt. Insbesondere ist es möglich, auf das eine oder andere Element zu verzichten und gleichwohl die Erfindung ausführen zu können.

Nachfolgend wird das erfindungsgemäße Verfahren zur Montage eines Fahrzeugreifens auf einer Felge, bevorzugt mit dem erfindungsgemäßen Montagesystem beispielhaft und ohne den Schutzbereich hierauf beschränken zu wollen, geschildert.
1. Einspannen des Rades / der Felge auf dem Montagetisch:
   Das Rad / die Felge wird auf den Montagetisch gelegt und mittels der Einspannvorrichtung, z. B. über die Spannklauen fest fixiert.
   Alternativ ist das Rad / die Felge zentrisch über eine schraubbare Spannvorrichtung durch das Mittelloch der Felge eingespannt.
   Dabei ist darauf zu achten, dass die Felgenhörner nicht beschädigt werden.
   Der wesentliche Vorteil der Erfindung ist, dass der Reifen nicht unter einer Drehbewegung montiert wird, und somit eine präzise Zentrierung des Rades nicht unbedingt erforderlich ist.
2. Montage der unteren Wulst über das obere Felgenhorn:
   Reifenwulste werden beidseitig in ausreichender Menge mit Montagegleitmittel versehen!
   Nachdem die Felge eingespannt wurde, wird der Reifen mit seiner unteren Wulst über den Teil des Felgenhorns der Felge geschoben, welche gegenüber der Aufnahme des Gurtes liegt.
   Dann wird der Gurt im Bereich der oberen Gürtelkante um den Reifen (in Umfangsrichtung des Reifens gesehen auf einen Teil der Lauffläche) gelegt, fixiert und leicht vorgespannt.
   Anschließend wird der Gurt mit der Spannvorrichtung fest angespannt. Durch dieses Spannen des Gurtes wird die untere Wulst in das Tiefbett geschoben.
   Die Wulst bewegt sich dadurch, dass ein leichter Druck mit dem Niederdrücker auf die obenliegende Seitenwand ausgeübt wird, über das obere Felgenhorn der Felge. Das Niederdrücken kann auch händisch erfolgen.
3. Montage der oberen Reifenwulst über das obere Felgenhorn
   Nach Abschluss der Montage der unteren Wulst wird der Gurt gelöst und ein Teil des oberen Reifenwulstes in Richtung Tiefbett, unter das obere Felgenhorn gedrückt.
   Dann wird der Niederhalter unter das Felgenhorn geschoben und fixiert.
   Nachdem die obere Wulst so im Bereich des Felgenbettes fixiert ist, wird der Gurt im Bereich der oberen Gürtelkante fixiert und leicht vorgespannt.
   Nachdem der korrekte Sitz des Reifens und des Gurtes kontrolliert wurde, wird der Gurt mit der Spannvorrichtung fest gespannt.
   Durch dieses Spannen des Gurtes wird die obere Wulst in einem Bereich von ca. 2/3 ihres Umfanges in das Tiefbett geschoben.
   Durch Einsatz des Niederdrückers wird die restliche, noch über dem Felgenhorn befindliche Wulst über das Horn gedrückt. Hierzu wird der Niederdrücker rechtwinklig zur Felge, also in einer Richtung im Wesentlichen parallel zur Radachse bewegt, wodurch die Wulst über das Felgenhorn gleitet. Unter Umständen ist es auch möglich, wenn es die Dimensionen des Fahrzeugreifens beziehungsweise der Felge erlauben, den Wulst auch durch händisches Drücken in eine Richtung parallel zur Radachse über das Felgenhorn zu drücken.

Im Gegensatz zu den bisher drehenden Montagetellern, bei denen die Felge gegen einen feststehenden Montagekopf dreht, oder wie bei anderen Systemen bei denen ein Montagekopf um die festgespannte Felge dreht, wird der Fahrzeugreifen in dem erfindungsgemäßen Verfahren schonend ohne jegliche Drehbewegung montiert.

Durch die Fixierung der Wulst im Tiefbett der Felge mittels Spannung des Gurtes und das Drücken der, in diesem Bereich entspannten Wulst, werden die typischen Montageschäden, wie sie bei der Montage mit drehenden Montiermaschinen entstehen, verhindert.

Abschließend wird zuerst der Gurt, danach die Einspannvorrichtung gelöst und das Komplettrad von der Montagevorrichtung genommen.

In gleicher Weise wie die Montage mit Hilfe des erfindungsgemäßen Verfahrens für den Fahrzeugreifen sehr schonend erfolgt, ist auch die Demontage mit den nachfolgend beschriebenen, ebenfalls erfindungsgemäßen Verfahren für den Fahrzeugreifen sehr schonend möglich. Dabei wird der gleiche Effekt, wie er für das Montieren eingesetzt wird, auch für das Demontieren des Fahrzeugreifens verwendet. Hierzu wird zunächst in geeigneter Weise der Fahrzeugreifen radial zur Felge versetzt, wodurch erreicht wird, dass zumindest ein Teil des Wulstes an der Reifenposition in das Tiefbett der Felge hineingedrückt wird. Ein anderer Bereich des Wulstes, in der Regel der Reifenposition gegenüberliegend, zumindest aber weit entfernt von der Reifenposition, wird dann durch eine im Wesentlichen rechtwinklige Bewegung, bezogen zur Felge, über das Felgenhorn aus der Felge herausgedrückt. Diese Vorgehensweise kann dabei sowohl für den unteren wie auch für den oberen Wulst verwendet werden. Das radiale Versetzen des Fahrzeugreifens kann, wie beschrieben, beispielhaft mit dem Spanngurt erfolgen. Es kann hierzu aber auch die Schubvorrichtung verwendet werden. Es kommt dabei auf eine relative Bewegung in radialer Richtung zwischen Felge und Fahrzeugreifen an, die im idealen Zustand konzentrisch zueinander angeordnet sind. Dabei ist es möglich, dass, ähnlich wie bei dem Montageverfahren, entweder die Felge festgehalten und der Fahrzeugreifen bewegt wird oder aber der Fahrzeugreifen wird festgehalten und die Felge wird relativ zum festgehaltenen Fahrzeugreifen in geeigneter Weise bewegt. Beide Varianten gehören zur Erfindung.

Nachfolgend wird die Demontage beispielhaft ausführlich beschrieben, ohne aber das erfindungsgemäße Verfahren zur Demontage des Fahrzeugreifens hierauf beschränken zu wollen.
1. Entlüften und Abdrücken
   Das Komplettrad wird durch Entfernen des Ventileinsatzes entlüftet. Nach dem vollständigen Entweichen der Luft wird der Reifen mittels Abdrückeinrichtung vom Felgen Wulstsitz in das Tiefbett gedrückt.
2. Einspannen des Rades / der Felge auf dem Montagetisch:
   Das Komplettrad wird auf den Montagetisch gelegt und die Felge mittels der Einspannvorrichtung über die Spannklauen fest fixiert.
   Dabei ist darauf zu achten, dass die Felgenhörner nicht beschädigt werden.
   Der wesentliche Vorteil der Erfindung ist, dass der Reifen nicht unter einer Drehbewegung montiert wird, und somit eine präzise Zentrierung des Rades nicht unbedingt erforderlich ist.
3. Überheben der oberen Wulst über das obere Felgenhorn
   Der Spanngurt wird um den Reifen gelegt und im Bereich der unteren Gürtelkante fixiert und leicht vorgespannt.
   Anschließend wird die obere Wulst des Reifen mit der Hand, oder unter Zuhilfenahme des Niederhalters in das Tiefbett gerückt.
   Nachdem der korrekte Sitz des Reifens und des Gurtes kontrolliert wurde, wird der Gurt mit der Spannvorrichtung fest gespannt.
   Durch dieses Spannen des Gurtes wird die obere Wulst in einem Bereich von ca. 1/3 ihres Umfanges in das Tiefbett geschoben.
   Hierdurch entsteht gegenüber des Druckpunktes, welcher durch den Gurt verursacht wird, ein Spalt zwischen der oberen Reifenwulst und dem Felgenhorn.
   Der Reifen wird dann mit der Hand, oder falls erforderlich auch unter Zuhilfenahme des Drückers, nach oben gedrückt.
   Unter Zuhilfenahme des Hebels wird die obere Reifenwulst über das obere Felgenhorn bewegt. Dabei wird der Gurt gelöst.
4. Überheben der unteren Wulst über das obere Felgenhorn
   Der Spanngurt wird um den Reifen gelegt und im Bereich der unteren Gürtelkante fixiert und leicht vorgespannt.
   Nachdem der korrekte Sitz des Reifens und des Gurtes kontrolliert wurde wird der Gurt mit der Spannvorrichtung fest gespannt.
   Durch dieses Spannen des Gurtes wird die untere Wulst in einem Bereich von ca. 1/3 ihres Umfanges in das Tiefbett geschoben. Hierdurch entsteht gegenüber des Druckpunktes, welcher durch den Gurt verursacht wird, ein Spalt zwischen der oberen Reifenwulst und dem Felgenhorn.
   Der Reifen wird dann mit der Hand, oder falls erforderlich auch unter Zuhilfenahme des Drückers, nach oben gedrückt.
   Unter Zuhilfenahme des Hebels wird die untere Reifenwulst über das obere Felgenhorn bewegt. Dabei wird der Gurt gelöst.
   Der demontierte Reifen wird abgenommen und die Felge aus der Einspannvorrichtung gelöst und entnommen.

Die Erfindung betrifft des Weiteren die Verwendung eines Gurtes zur Montage beziehungsweise Demontage eines Fahrzeugreifens auf einer Felge. Mit Hilfe des Gurtes ist es möglich, den Fahrzeugreifen relativ zur Felge radial derart zu versetzen, dass in einfacher Weise eine Montage beziehungsweise Demontage des Fahrzeugreifens auf der Felge möglich ist.

In diesem Zusammenhang wird insbesondere darauf hingewiesen, dass alle im Bezug auf die Montagevorrichtung beziehungsweise das Montagesystem beschriebenen Merkmale und Eigenschaften aber auch Verfahrensweisen sinngemäß auch bezüglich der Formulierung des erfindungsgemäßen Montageverfahrens beziehungsweise Demontageverfahren übertragbar und im Sinne der Erfindung einsetzbar und als mit offenbart gelten. Gleiches gilt auch in umgekehrter Richtung. Das bedeutet, nur im Bezug auf das Montageverfahren beziehungsweise Demontageverfahren genannte, bauliche, also vorrichtungsgemäße Merkmal können auch im Rahmen der Vorrichtungsansprüche beziehungsweise Ansprüche das System betreffend, berücksichtigt und beansprucht werden und zählen ebenfalls zur Erfindung und zur Offenbarung.

In der Zeichnung ist die Erfindung schematisch dargestellt. Es zeigen:
- Fig. 1a, 1b, 1c: je in einer Seitenansicht das erfindungsgemäße Montagesystem unter Verwendung der erfindungsgemäßen Montagevorrichtung,
- Fig. 1d: in einem Detail den Niederdrücker für die Demontage nach der Erfindung,
- Fig. 2a: in einer Draufsicht den Niederdrücker der erfindungsgemäßen Montagevorrichtung,
- Fig. 2b: einen Schnitt durch den Niederdrücker entlang der Linie IIb - IIb in Fig. 2a und
- Fig. 3, 4: in einer dreidimensionalen Ansicht (Fig. 3) beziehungsweise einer Draufsicht (Fig. 4) den Niederhalter nach der Erfindung,
- Fig. 5a, 5b, 5c: in einer Draufsicht verschiedene Schritte des erfindungsgemässen Verfahrens.

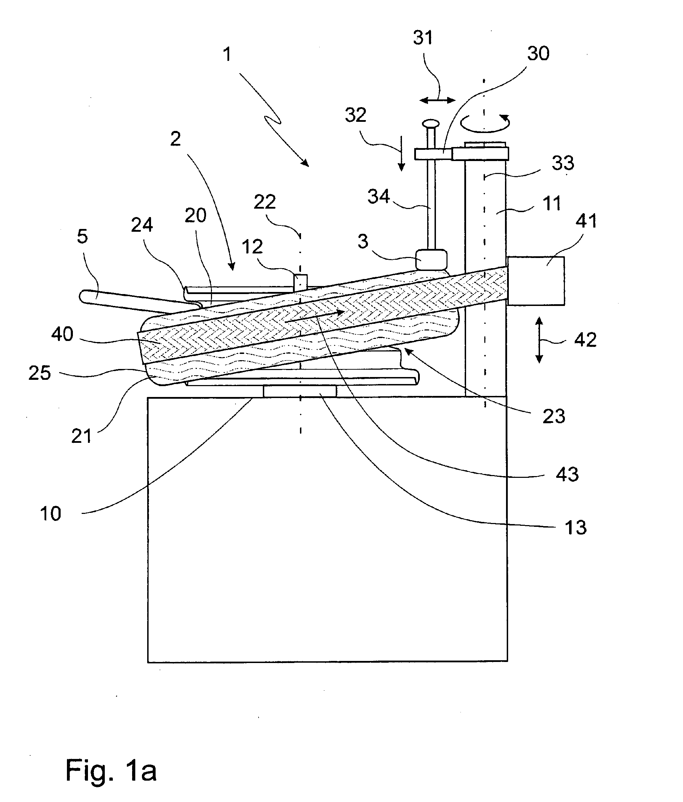

In Fig. 1a ist das erfindungsgemäße Montagesystem schematisch dargestellt. Auf der Montagevorrichtung 1 liegt auf dem Montagetisch 10 ein zu montierendes Komplettrad 2 auf. Das Komplettrad 2 besteht dabei aus einer Felge 20 und einem darauf zu montierenden Fahrzeugreifen 21. Der Montagetisch 10 besitzt hierzu eine Aufnahme 13, die insbesondere auch einen Aufnahmedorn 12 umfasst, durch welchen geeigneterweise die Felge 20 auf dem Montagetisch 10 befestigbar ist. Es ist zu beachten, dass es für das Befestigen des Fahrzeugreifens 21 auf dem Montagetisch 10 eine Vielzahl von verschiedenen Einspannvorrichtungen gibt, die alle erfindungsgemäß verwendbar sind.

Erfindungsgemäß ist es dabei gleichbedeutend, ob die Felge 20 direkt auf dem Montagetisch 10, also dessen Oberfläche aufliegt oder aber, wie hier gezeigt, mit Hilfe der Aufnahme 13 etwas hiervon beabstandet über der eigentlichen Oberfläche des Montagetisches 10 angeordnet ist.

Seitlich neben dem Rad 2 ist eine Stütze 11 vorgesehen, die einen Tragarm 30 trägt. Die Stütze 11 steht dabei deutlich über dem oberen Rand der Felge 20 vor. Die Ausrichtung der Stütze 11 ist im Wesentlichen parallel zur Reifenachse 22, die ihrerseits rechtwinklig zur Felge 20 (z. B. definiert durch die obere, kreisartige Kante des Felgenhornes 24) definiert ist. Hieraus resultiert, dass der Tragarm 30 mit einigem Abstand oberhalb des zu montierenden Fahrzeugreifens 21 angeordnet ist.

Der in Fig. 1a gezeigte Montagestand steht kurz vor dem Abschluß. Bei dem Montagevorgang wird der Fahrzeugreifen 21, wie in Fig. 1a beziehungsweise 1b gut zu erkennen, zur Felge 20 verkippt auf die Felge 20 aufgesteckt, derart, dass im linken Bereich der untere und obere Wulst sich bereits auf der Felge 20, also hinter oder unterhalb des oberen Felgenhornes 24 befinden, aber der rechte Bereich noch nicht. Der zweite, obere Reifenwulst, des Fahrzeugreifens 21 ist im rechten Bereich noch über das obere Felgenhorn 24 zu bringen. Um dies zu erreichen, geht die Erfindung wie folgt vor.

Das erfindungsgemäße Montagesystem umfasst eine Schubvorrichtung 4, die in dem hier ausgeführten Beispiel aus einem Gurt 40 und einer Spannvorrichtung 41 für den Gurt 40 besteht. Der Gurt 40 wird auf einen Großteil der Lauffläche 25 in Umfangsrichtung des Fahrzeugreifens 21 gelegt. Die Spannvorrichtung 41 bewirkt, dass der Gurt 40 in Pfeilrichtung 43 nach rechts versetzt wird, wodurch insgesamt der Fahrzeugreifen 21 relativ zur Felge 20 nach rechts versetzt werden möchte. Da aber die Felge 20 auf dem Montagetisch 10 durch die Einspannvorrichtung festgehalten ist, rutscht im linken Bereich der Felge 20 der obere Wulst in das Tiefbett 23, wodurch der rechte Bereich des oberen Wulstes bezüglich der radialen Richtung (bezogen auf die Felge 20) soweit nach rechts versetzt wird, dass dieser mit Hilfe des Niederdrückers 3 in einfacher und insbesondere für den Fahrzeugreifen schonender Art und Weise über das Felgenhorn 24 gedrückt werden kann. Dabei befindet sich der Niederdrücker 3 an einer in diesem Ausführungsbeispiel vertikal orientierten Führungsstange 34 und ist in der Lage, im Wesentlichen parallel zur Radachse 22, also hier nach unten gedrückt zu werden, dies im durch den Pfeil 32 angedeutet. Hierzu befindet sich an dem Niederdrücker 3 ein entsprechender Antrieb (nicht gezeigt), der zum Beispiel hydraulisch, pneumatisch oder auch elektrisch ausgebildet ist und bewirkt, dass der Niederdrücker 3 nach unten in Richtung des Pfeiles 32 bewegt wird. Es ist klar, dass für Demontagezwecke eine andere Bewegungsrichtung vorsehbar ist oder aber die Felge einfach auf dem Montagetisch umgekehrt aufgelegt wird, um den Fahrzeugreifen über das obere Felgenhorn 24 abzudrücken. Natürlich ist es auch möglich, den Niederdrücker händisch, zum Beispiel mit einer entsprechenden Hebelmechanik oder ähnlichen zu betätigen. Grundsätzlich erlaubt es die Erfindung aber auch, den Fahrzeugreifen mit der Hand in Richtung des Pfeiles 32, also in Richtung parallel zur Radachse 22 auf die Felge aufzuschieben.

Für die Anordnung des Niederdrückers 3 schlägt die Erfindung mehrere Varianten vor, die in Fig. 1a beziehungsweise 1b gezeigt sind. In den in Fig. 1a gezeigten Ausführungsbeispielen wird der Niederdrücker 3 über die Stange 34 an den Tragarm 30 gehalten, wobei die Anordnung so gewählt ist, dass die Lage der Stange 34 auf dem Tragarm 30 einstellbar ist. Dadurch kann den verschiedenen Durchmessern der Fahrzeugreifen und Felgen Rechnung getragen werden. Die Verschiebbarkeit beziehungsweise Einstellbarkeit ist durch den Doppelpfeil 31 angedeutet. Des Weiteren ist optional auch eine Verschwenkbarkeit des Tragarmes 30 um die Drehachse 33 der Stütze 11 vorgesehen. Auch dadurch ist es möglich, den Ansatzpunkt des Niederdrückers 3 einzustellen. Die Einstellbarkeit erfolgt gegebenenfalls händisch oder auch unter Zuhilfenahme von entsprechenden elektrischen, pneumatischen oder hydraulischen Stellantrieben.

Um sicher zu stellen, dass der Wulst des Fahrzeugreifens 21 (dies ist sowohl bei dem unteren als auch bei dem oberen Wulst möglich) während der Montage im Tiefbett 23 ist, wird dies durch den Niederhalter 5 unterstützt, der auf der linken Seite zwischen dem Fahrzeugreifen 21 und dem Felgenhorn 24, sich an diesem an seiner Innenkante abstützend, eingeführt ist, und zum Beispiel als Handwerkzeug ausgebildet ist.

Um ein mögliches Abrutschen des Gurtes 40 von der Lauffläche 25 während des Spannvorganges zu vermeiden, ist eine Lageveränderung 42 der Spannvorrichtung 41 vorgesehen. Diese ist in dem hier gezeigten Ausführungsbeispiel als Höhenlageveränderung an der Stütze 11 realisiert. Dadurch ist es möglich, den Versatz des Gurtes 40 beim Spannen in geeigneter Weise zu kompensieren.

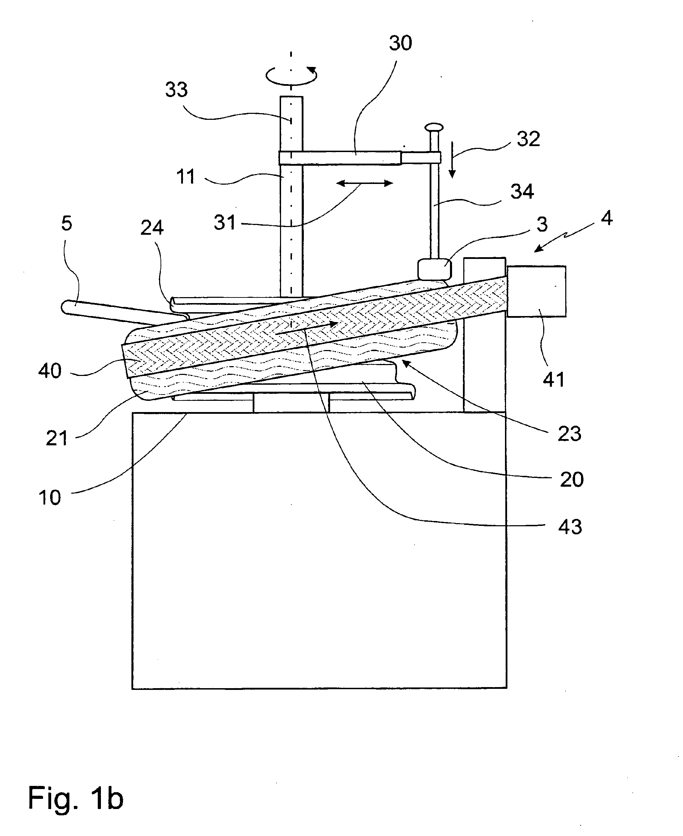

In Fig. 1b ist eine zur Fig. 1a sehr ähnliche Ausgestaltung gezeigt. Unterschiedlich ist hier nur die Ausgestaltung der Stütze 11, die in dem in Fig. 1b gezeigten Ausführungsbeispiel auf dem Aufnahmedorn 12 befestigt ist. Der Tragarm 30 ist hier zum Beispiel teleskopierbar ausgebildet und erlaubt daher eine Lageveränderung der Stange 34. Gut zu erkennen ist in diesem Ausführungsbeispiel, dass die Drehachse 33 des Tragarmes 30 parallel ist zur Reifenachse 22, die durch die Felge 20 definiert ist.

Im Vergleich zwischen den Fig. 1a und 1b befindet sich bei der Variante nach Fig. 1b die Stütze 11 nicht neben dem Komplettrad 2, sondern durchdringt mittig die Felge 20, da die Stütze 11 auf dem Aufnahmedorn 12 aufgesetzt und dort befestigt ist. Die Felge 20 ist auf dem Aufnahmedorn 12 aufgesteckt.

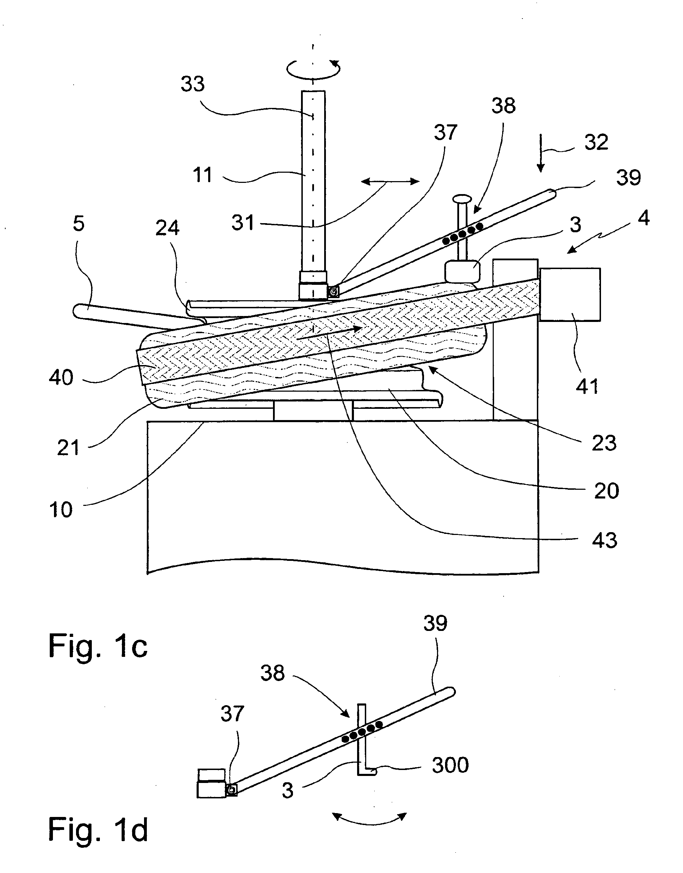

In dem in Fig. 1c gezeigten Ausführungsbeispiel wird anstelle von einem elektrisch, hydraulich, pneumatisch vorgesehen bzw. betriebenem Niederdrücker 3 ein mit einem Hebel 39 ausgestatteter Niederdrücker zur Verfügung gestellt.

Dabei ist der Hebel 39 an dem Gelenk 37 um eine im wesentlichen horizontale Drehachse (somit in der parallel zur Felge 20 liegend) drehbar.

Der Hebel 39 besitzt mehrere Rastpositionen 38, durch die der radiale Abstand des Niederdrückers 3 auf die jeweilige Reifengröße anpassbar ist.

Durch Muskelkraft wird dann der Hebel 39 an seinem außenliegenden Ende unter Benutzung des Hebelgesetzes nach unten gedrückt (Pfeilrichtung 32), um bei gespanntem Gurt den Reifenwulst in diesem Bereich unter das Felgenhorn zu drücken.

Fig. 1d zeigt eine Variante des Niederdrückers 3 für die Demontage, wo dieser einen Haken 300 aufweist, um den Fahrzeugreifen 21 nach oben abzuziehen. Mit der Erfindung kann aber auch der Reifen nach unten abgedrückt werden, diese Auswechseleinheit kann sowohl nach unten oder oben bewegt werden, um den Fahrzeugreifen 21 von der Felge 20 schonend zu demontieren. Der Haken 300 ist drehbar gelagert.

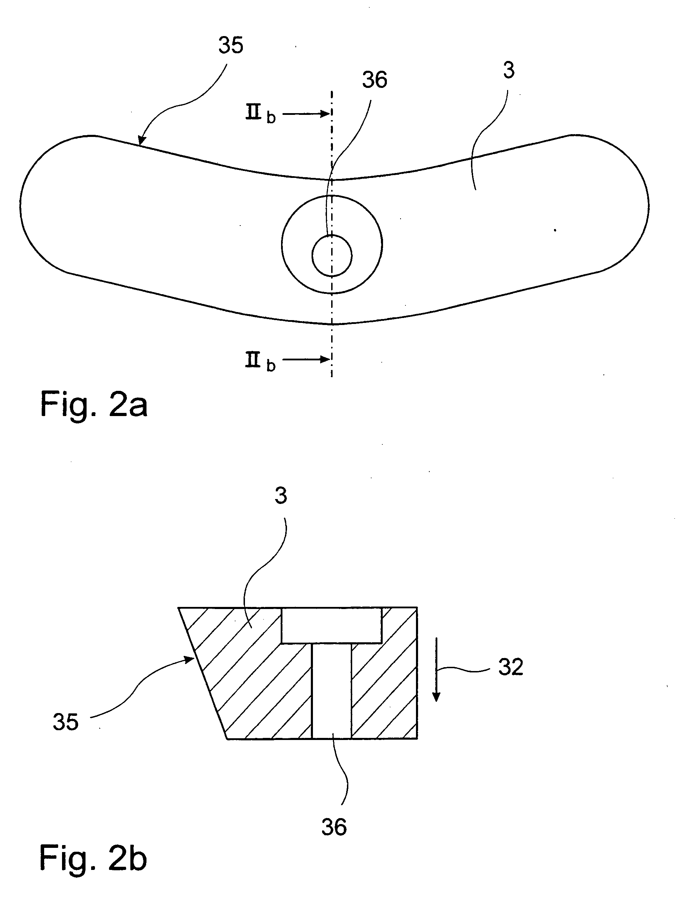

Fig. 2a zeigt schematisch den Niederdrücker 3, der dem Reifenverlauf folgend abgewinkelt ist und mittig, zentral eine Befestigungsöffnung 36 zur Befestigung des Niederdrückers 3 an der Stange 34 aufweist. Geschickterweise ist die der Felge 20 zugewandte Innenfläche 35 geneigt, um in geeigneter Weise den Wulst über das Felgenhorn 24 zu drücken.

In Fig. 2b ist diese Abschrägung 35 schematisch dargestellt. Dabei steht der in Bewegungsrichtung 32 während des Einsatzes des Niederdrückers untere Bereich der Innenfläche 35 von der Felge weiter zurück, dieser Abstand wird dann im weiteren Verlauf entsprechend durch die geneigte Innenfläche 35 verringert. Der Niederdrücker besteht zum Beispiel aus Vollkunststoff, gegebenenfalls mit einer Metallarmierung.

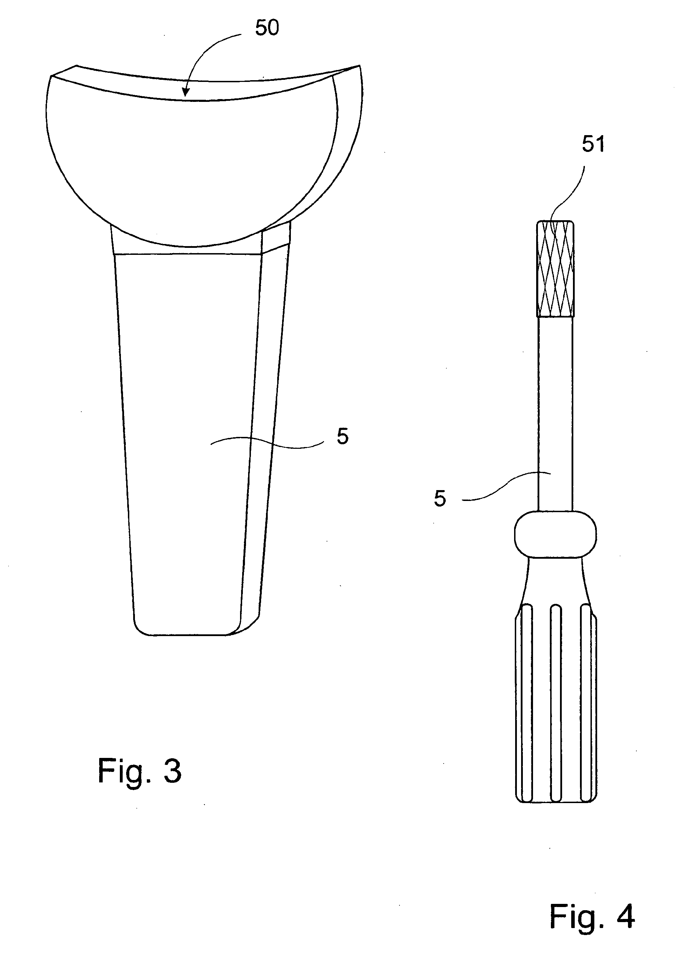

Fig. 3 und Fig. 4 zeigen zwei alternative Ausgestaltungen des Niederhalters 5, wobei in Fig. 3 der Niederhalter eine dem Felgenverlauf beziehungsweise Wulstverlauf gewölbte Innenfläche 50 aufweist, um in einem großen Bereich mit dem Reifen zusammenwirken zu können. Der Niederhalter 5 ist dabei zum Beispiel aus Kunststoff bestehend, zusätzlich zu der Wölbung ist die Innenfläche 50 aber auch geneigt, das heißt in Seitenansicht keilartig ausgebildet.

In Fig. 4 ist eine andere Variante des Niederhalters 5 realisiert. Der Niederhalter 5 ist dabei ähnlich wie ein Schraubenzieher ausgebildet und besitzt einen Überzug 51 zum Beispiel aus Kunststoff oder Gummi, um den Reifenwulst zu schonen.

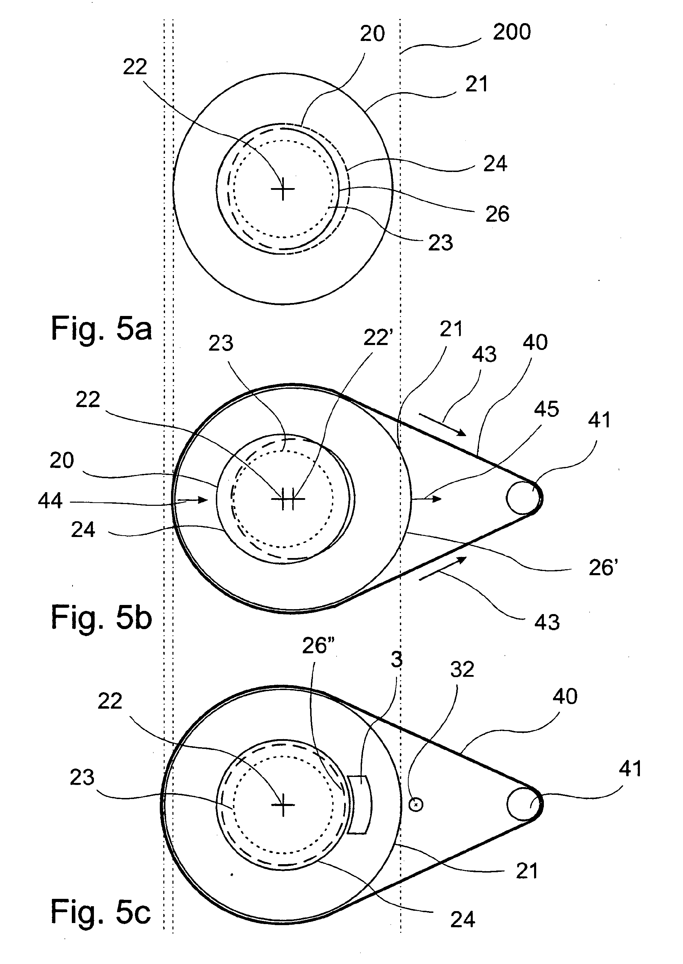

Mit Hilfe der Zeichnungen nach den Figuren 5a, 5b, 5c wird nachfolgend das erfindungsgemäße Verfahren kurz erläutert.

Zunächst wird der Fahrzeugreifen 21 auf die Felge 20 aufgestülpt. Dies ist in Fig. 5a gezeigt. Da der Reifen 21 verkippt aufzulegen ist, ergibt sich eine im wesentlichen elliptische Ansicht des Fahrzeugreifens 21. An dieser Stelle sei bereits Bezug genommen auf die Hilfslinie 200, die im rechten Teil des Reifens angeordnet ist und der Tatsache, daß in dieser Projektion ein Spalt zwischen der Hilfslinie 200 und dem rechten Rand des Reifens 21 besteht. Verdeckt liegende Kanten sind, soweit sie wichtig sind, gestrichelt dargestellt. Wichtig ist dabei der innere Reifenwulst 26, der im linken Bereich unter das Felgenhorn 24 rutscht und im rechten Bereich noch oberhalb ist. Es ist gut zu erkennen, daß im rechten Bereich der Reifenwulst 26 innerhalb des Durchmessers des Felgenhornes 24 ist, der dadurch etwas verdeckt ist.

Im nächsten Schritt (5b) ist die Schubrichtung 4 im Einsatz. Hierzu ist der Gurt 40 auf der Lauffläche 25 des Fahrzeugreifens 21 in einem weiteren Bereich der Lauffläche, diesem in Umfangsrichtung folgend, aufgesetzt. Die Spannvorrichtung 41 ist aktiv, der Gurt 40 wird in Pfeilrichtung 43 in letzter Konsequenz nach rechts gezogen und auf den Fahrzeugreifen 21 ebenfalls eine Kraftkomponente nach rechts eingeprägt. Dies führt dann zu einer verhältnismäßig hohen, radialen Kraftkomponente 44 nach rechts, im linken Bereich des Reifens, wodurch der in diesem Bereich unterhalb des Felgenhorns 24 befindliche Reifen 26 ins Tiefbrett 23 gedrückt wird. Durch die Zugbewegung 43 wird die gedachte Reifenachse 22' nach rechts versetzt.

Auch der rechte Bereich des Reifens wird nach rechts entlang des Pfeiles 45 versetzt, derart, daß hier der Reifenwulst 26' nach rechts (idealisiert) außerhalb des Durchmessers des Felgenhorns 24 gelangt. Bezogen auf die Hilfslinie 200 ist im übrigen der rechte Teil des Reifens soweit nach rechts versetzt, daß die Hilfslinie 200 den Reifen schneidet. Dies ist der wesentliche Effekt der Erfindung, nämlich daß durch die Schubvorrichtung 4 der Bereich des Reifens, der bereits unter dem Felgenhorn ist, mit seinem Reifenwulst ins Tiefbett gedrückt wird und der diesem Bereich gegenüberliegende Bereich (in Fig. 5b unter Umständen sehr überspitzt gezeigt, aber sinngemäß zutreffend), so über das Felgenhorn oder darüber hinausgelangt, um in einer Bewegung rechtwinklig zur Zeichenebene nach unten (siehe Pfeilrichtung 32 in Fig. 5c) dann nach unten gedrückt zu werden. In Zug- bzw. Spannrichtung (43) gesehen, neben der Reifenachse 22, ist der Niederdrücker 3 vorgesehen, der in einer Bewegung rechtwinklig zur Spannrichtung 43 den im idealen Fall über dem Felgenhorn, ansonsten aber nur leicht klemmenden Bereich, des Reifenwulstes 26'' jetzt nach unten drückt, damit der Reifenwulst vollumfänglich in das Tiefbett gelangt. Damit ist die Montage des Reifens abgeschlossen.

## Patentansprüche

1. Montagesystem bestehend aus einer Montagevorrichtung zur Montage beziehungsweise Demontage eines Fahrzeugreifens auf beziehungsweise von einer Felge, mit einem Niederdrücker für das Aufschieben des Fahrzeugreifens auf die Felge, einem Montagetisch auf dem die Felge aufliegt und einer Schubvorrichtung, welche eine relative Bewegung in radialer Richtung zwischen Felge und Fahrzeugreifen bewirkt, dass ein Teil des Reifenwulstes, welcher auf der Felge ist, in das Tiefbett der Felge gelangt, wobei die Schubvorrichtung ausgebildet ist, um an einer Reifenposition des Fahrzeugreifens (21) eine Schubkraft in den Fahrzeugreifen (21) einzuprägen und den Wulst des Fahrzeugreifens (21) in das Tiefbett (23) der Felge (20) einzudrücken und an einer von der Reifenposition entfernten, am Fahrzeugreifen (21) diametral zur Reifenposition gelegenen Stelle der Niederdrücker (3) den Wulst durch eine zur Reifenachse (22) parallele oder spitzwinklige Bewegung (32) über das Felgenhorn (24) zu drücken, wobei die Bewegung (32) des Niederdrückers (3) für das Aufschieben des Fahrzeugreifens (21) auf die Felge (20) oder das Abziehen des Fahrzeugreifens (21) von der Felge (20) parallel oder spitzwinklig ist zur Reifenachse (22), wodurch der Reifen in einer Drehbewegung nicht bewegt wird, **dadurch gekennzeichnet, dass** während der Bewegung (32) des Niederdrückers (3) für das Aufschieben oder Abziehen des Fahrzeugreifens (21) keine oder nur eine minimalste relative Bogenbewegung zwischen Niederdrücker (3) und Felge (20) vorgesehen ist.

2. Montagesystem nach Anspruch 1, **dadurch gekennzeichnet, dass** die Montagevorrichtung (1) eine im Wesentlichen parallel zur Reifenachse (22) orientierte Stütze (11) aufweist, die neben dem auf dem Montagetisch (10) aufliegenden Rad (2) angeordnet ist und die Stütze (11) den Niederdrücker (3) trägt oder die Montagevorrichtung (1) einen Aufnahmedorn (12) zur Aufnahme der Felge (20) aufweist und auf dem Aufnahmedorn (12) eine Stütze (11) für den Niederdrücker (3) befestigbar ist.

3. Montagesystem nach einem der vorhergehenden Ansprüche, **dadurch gekennzeichnet, dass** der Niederdrücker (3) über einen Tragarm (30) mit der Stütze (11) verbindbar ist und/oder die Position des Niederdrückers (3) auf dem Tragarm (30) oder die wirksame Länge des Tragarmes (30) veränderbar ist und insbesondere auf die jeweiligen Durchmesser des Fahrzeugreifens (21) einstellbar ist und/oder der Tragarm (30) an der Stütze (11) drehbar gelagert ist.

4. Montagesystem nach einem der vorhergehenden Ansprüche, **dadurch gekennzeichnet, dass** der Niederdrücker (3) gebogen ausgebildet ist, um dem Reifenwulst folgend auf diesen einzuwirken und/oder ein seitlicher, der Felge (20) zugewandter Bereich des Niederdrückers (3) abgeschrägt (35) ist und/oder ein elektrischer, hydraulischer, pneumatischer oder händischer Antrieb des Niederdrückers (3) vorgesehen ist.

5. Montagesystem nach einem der vorhergehenden Ansprüche, **dadurch gekennzeichnet, dass** die Schubvorrichtung durch einen, insbesondere durch eine Spannvorrichtung (41) spannbaren Gurt (40) gebildet ist, wobei der Gurt (40) während der Montage entlang der Lauffläche (25) des Fahrzeugreifens (21), zumindest teilweise auf der Lauffläche (25) anliegt und gespannt ist und/oder die Position der Spannvorrichtung (41) an der Montagevorrichtung (1), insbesondere während der Montage, veränderbar ist und/oder das Montagesystem einen Niederhalter (5) umfasst, durch welchen der Wulst während der Montage im Tiefbett (23) gehalten ist.

6. Montagesystem nach einem der vorhergehenden Ansprüche, **gekennzeichnet durch** einen Niederhalter (5) zum Fixieren des Wulsts während der Montage, wobei zumindest der mit dem Fahrzeugreifen (21) zusammenwirkende Bereich des Niederhalters (5) aus einem Kunststoff- oder Gummimaterial besteht.

7. Montagesystem nach Anspruch 6, **dadurch gekennzeichnet, dass** der Niederhalter (5) als Handwerkzeug ausgebildet ist und/oder der Niederhalter (5) im vorderen Bereich dem Radius des Felgenhorns beziehungsweise des Tiefbetts im Wesentlichen bzw. weitgehend entspricht.

8. Verfahren zur Montage eines Fahrzeugreifens auf einer Felge unter Verwendung eines Montagesystems nach einem der vorhergehenden Ansprüche, wobei sich ein Fahrzeugreifen zumindest teilweise auf der Felge (20) befindet, indem ein Wulst sich zumindest teilweise über dem Felgenhorn(24) befindet, wobei durch eine Schubvorrichtung eine relative Bewegung in radialer Richtung zwischen Felge und Fahrzeugreifen erfolgt, welche den Fahrzeugreifen relativ derart radial zu der Felge versetzt, dass ein Teil des Wulstes in das Tiefbett der Felge hineingedrückt wird und hernach der noch vor dem Felgenhorn befindliche Wulstbereich durch eine zur Reifenachse (22) parallele oder spitzwinklige Bewegung (32), über das Felgenhorn (24) in die Felge (20) hineingedrückt wird, und der Reifen in einer Drehbewegung nicht bewegt wird, **dadurch gekennzeichnet, dass** während dieser Bewegung keine oder nur eine minimalste Bogenbewegung erfolgt.

9. Verfahren nach Anspruch 8, **dadurch gekennzeichnet, dass** als Schubvorrichtung ein Gurt längs der Lauffläche des Fahrzeugreifens, zumindest entlang eines Teils der Lauffläche, angeordnet und gespannt wird.

10. Verfahren zur Montage eines Fahrzeugreifens auf einer Felge nach einem der Ansprüche 8 und 9, **gekennzeichnet durch** die Abfolge folgender Schritte:
1. Einspannen der Felge auf einem Montagetisch;
2. der Reifen wird mit seiner unteren Wulst zumindest teilweise über das obere Felgenhorn geschoben;
3. Anordnung eines Gurtes auf dem Reifen und Spannen des Gurtes;
4. der untere Reifenwulst wird zumindest teilweise in das Tiefbett der Felge geschoben;
5. der untere Reifenwulst nur **durch** eine Bewegung des Niederdrückers oder händisches Drücken in axialer- Richtung über das Felgenhorn geschoben;
6. der obere Reifenwulst wird zumindest teilweise unter das obere Felgenhorn gedrückt;
7. Anordnung und gegebenenfalls Fixierung des Niederhalters unter dem Felgenhorn;
8. erneute Anordnung des Gurtes auf dem Reifen und Spannen des Gurtes;
9. **durch** axiales Drücken, z. B. händisch oder **durch** Niederdrücker, des noch über dem Felgenhorn befindlichen oberen Reifenwulstes gleitet dieser über das Felgenhorn.

11. Verfahren zur Demontage eines Fahrzeugreifens von einer Felge unter Verwendung eines Montagesystems nach einem der Ansprüche 1 bis 7, **gekennzeichnet durch** die Abfolge folgender Schritte:
1. Radiales Versetzen des Fahrzeugreifens relativ zur Felge, z. B. **durch** Anordnung und Spannen eines Gurtes längs der Lauffläche des Fahrzeugreifens, zumindest entlang eines Teils der Lauffläche, wodurch ein Teil des Wulstes in das Tiefbett der Felge hineingedrückt wird;
2. Ein anderer Bereich des Wulstes wird **durch** eine zur Reifenachse (22) im Wesentlichen parallele oder spitzwinklige Bewegung, über das Felgenhorn hinaus aus der Felge herausgedrückt
oder
1. Einspannen des Rades auf einem Montagetisch;
2. Anordnung des Gurtes auf dem Reifen und Spannung des Gurtes;
3. der obere Wulst wird zumindest teilweise in das Tiefbett gedrückt;
4. der Reifen wird auf der Felge nach oben gedrückt;
5. der obere Reifenwulst wird über das obere Felgenhorn bewegt;
6. Umspannung des Gurtes;
7. der untere Wulst wird zumindest teilweise in das Tiefbett geschoben;
8. der Reifen wird an der Felge nach oben gedrückt;
9. der untere Reifenwulst wird über das obere Felgenhorn bewegt.

12. Verwendung eines Gurtes zur Montage bzw. Demontage eines Fahrzeugreifens auf einer Felge mit einer Vorrichtung nach einem der Ansprüche 1 bis 7.

## Claims

1. Mounting system comprising a mounting apparatus for mounting or demounting a vehicle tyre on or from a rim, with a passing-down means for pushing the vehicle tyre onto the rim, a mounting table on which the rim rests, and a pushing device which produces a relative movement in the radial direction between rim and vehicle tyre such that a part of the tyre bead which is on the rim passes into the well base of the rim, wherein the pushing device is designed to impart a pushing force into the vehicle tyre (21) at a tyre position of the vehicle tyre (21) and to press the bead of the vehicle tyre (21) into the well base (23) of the rim (20) and, at a point remote from the tyre position and situated on the vehicle tyre (21) diametrically with respect to the tyre position, the pressing-down means (3) is designed to press the bead over the rim flange (24) by a movement (32) which is parallel or acute-angled with respect to the tyre axis (22), wherein the movement (32) of the pressing-down means (3) for pushing the vehicle tyre (21) onto the rim (20) or pulling the vehicle tyre (21) off the rim (20) is parallel or acute-angled with respect to the tyre axis (22), with the result that the tyre is not moved in a rotary movement, **characterized in that** no or only a most minimal relative curved movement between pressing-down means (3) and rim (20) is provided during the movement (32) of the pressing-down means (3) for pushing on or pulling off the vehicle tyre (21).

2. Mounting system according to Claim 1, **characterized in that** the mounting device (1) has a support (11) which is oriented substantially parallel to the tyre axis (22) and which is arranged next to the wheel (2) lying on the mounting table (10), and the support (11) carries the pressing-down means (3), or the mounting apparatus (1) has a receiving mandrel (12) for receiving the rim (20) and a support (11) for the pressing-down means (3) can be fastened on the receiving mandrel (12).

3. Mounting system according to one of the preceding claims, **characterized in that** the pressing-down means (3) can be connected to the support (11) via a carrying arm (30) and/or the position of the pressing-down means (3) on the carrying arm (30) or the effective length of the carrying arm (30) can be varied and in particular adjusted to the respective diameters of the vehicle tyre (21) and/or the carrying arm (30) is rotatably mounted on the support (11).

4. Mounting system according to one of the preceding claims, **characterized in that** the pressing-down means (3) has a curved design in order to act on the tyre bead by following the latter and/or a lateral region of the pressing-down means (3) that faces the rim (20) is bevelled (35) and/or an electrical, hydraulic, pneumatic or manual drive of the pressing-down means (3) is provided.

5. Mounting system according to one of the preceding claims, **characterized in that** the pushing device is formed by a belt (40) which can be tensioned in particular by a tensioning device (41), wherein, during the mounting operation along the tread (25) of the vehicle tyre (21), the belt (40) bears at least partially on the tread (25) and is tensioned and/or the position of the tensioning device (41) on the mounting apparatus (1) can be varied, in particular during the mounting operation, and/or the mounting system comprises a holding-down means (5) by means of which the bead is held in the well base (23) during the mounting operation.

6. Mounting system according to one of the preceding claims, **characterized by** a holding-down means (5) for fixing the bead during the mounting operation, wherein at least the region of the holding-down means (5) that interacts with the vehicle tyre (21) consists of a plastic or rubber material.

7. Mounting system according to Claim 6, **characterized in that** the holding-down means (5) is designed as a manual tool and/or the holding-down means (5) substantially or largely corresponds in the front region to the radius of the rim flange or of the well base.

8. Method for mounting a vehicle tyre on a rim using a mounting system according to one of the preceding claims, wherein a vehicle tyre is situated at least partially on the rim (20) in that a bead is situated at least partially above the rim flange (24), wherein a relative movement takes place in the radial direction between rim and vehicle tyre by means of a pushing device, which movement shifts the vehicle tyre in a relative manner radially to the rim in such a way that a part of the bead is pressed into the well base of the rim and then the bead region still situated in front of the rim flange is pressed over the rim flange (24) into the rim (20) by a movement (32) which is parallel or acute-angled with respect to the tyre axis (22), and the tyre is not moved in a rotary movement, **characterized in that** no or only a most minimal curved movement occurs during this movement.

9. Method according to Claim 8, **characterized in that** as the pushing device a belt is arranged along the tread of the vehicle tyre, at least along a part of the tread and tensioned.

10. Method for mounting a vehicle tyre on a rim according to either of Claims 8 and 9, **characterized by** the sequence of the following steps:
1. clamping the rim on a mounting table;
2. the tyre is pushed with its lower bead at least partially over the upper rim flange;
3. arranging a belt on the tyre and tensioning the belt;
4. the lower tyre bead is pushed at least partially into the well base of the rim;
5. the lower tyre bead is pushed over the rim flange only by a movement of the pressing-down means or manual pressing in the axial direction;
6. the upper tyre bead is pressed at least partially below the upper rim flange;
7. arranging and, if appropriate, fixing the holding-down means below the rim flange;
8. once again arranging the belt on the tyre and tensioning the belt;
9. by axial pressing, for example manually or by pressing-down means, of the upper tyre bead still situated above the rim flange, this tyre bead slides over the rim flange.

11. Method for demounting a vehicle tyre from a rim using a mounting system according to one of Claims 1 to 7, **characterized by** the sequence of the following steps:
1. Radial shifting of the vehicle tyre relative to the rim, for example by arranging and tensioning a belt along the tread of the vehicle tyre, at least along a part of the tread, with the result that a part of the bead is pressed into the well base of the rim;
2. Another region of the bead is pushed out of the rim beyond the rim flange by a movement which is substantially parallel or acute-angled with respect to the tyre axis (22);
or
1. clamping the wheel on a mounting table;
2. arranging the belt on the tyre and tensioning the belt;
3. the upper bead is pressed at least partially into the well base;
4. the tyre is pressed upwardly on the rim;
5. the upper tyre bead is moved over the upper rim flange;
6. retensioning the belt;
7. the lower bead is pushed at least partially into the well base;
8. the tyre is pressed upwardly on the rim;
9. the lower tyre bead is moved over the upper rim flange.

12. Use of a belt for mounting or demounting a vehicle tyre on or from a rim with an apparatus according to one of Claims 1 to 7.

## Revendications

1. Système de montage constitué d'un ensemble de montage permettant le montage et le démontage d'un bandage de roue de véhicule sur une jante,
avec un poussoir qui permet de glisser le bandage de roue de véhicule sur la jante, une table de montage sur laquelle repose la jante et un dispositif d'avancement qui a pour effet un déplacement relatif dans la direction radiale entre la jante et le bandage de roue de véhicule de telle sorte qu'une partie du bourrelet du bandage de roue située sur la jante pénètre dans le lit de la jante,
le dispositif d'avancement étant configuré pour appliquer une force d'avancement sur le bandage (21) de roue de véhicule en une position du bandage (21) de roue de véhicule, pour repousser le bourrelet du bandage (21) de roue de véhicule dans le lit (23) de la jante (20) et pour repousser en un emplacement du poussoir (3) diamétralement opposé à la position du bandage (21) de roue de véhicule le bourrelet au-dessus de la corne (24) de la jante dans un déplacement (32) parallèle ou formant un angle aigu par rapport à l'axe (22) du bandage de roue,
le déplacement (32) du poussoir (3) en vue du placement du bandage (21) de roue de véhicule sur la jante (20) ou de l'enlèvement du bandage (21) de roue de véhicule hors de la jante (20) étant parallèle ou formant un angle aigu par rapport à l'axe (22) du bandage de roue, le bandage de roue n'étant pas déplacé en rotation,
**caractérisé en ce que**
pendant le déplacement (32) du poussoir (3) en vue du placement ou de l'enlèvement du bandage (21) de roue de véhicule, aucun déplacement relatif en arc ou un déplacement relatif en arc minimal sont prévus entre le poussoir (3) et la jante (20).

2. Système de montage selon la revendication 1, **caractérisé en ce que** l'ensemble de montage (1) présente un appui (11) orienté essentiellement parallèlement à l'axe (22) du bandage de roue et disposé à côté de la roue (2) placée sur la table de montage (10), **en ce que** l'appui (11) porte le poussoir (3) ou **en ce que** l'ensemble de montage (1) présente un mandrin de reprise (12) qui reprend la jante (20) et **en ce qu'**un appui (11) prévu pour le poussoir (3) peut être fixé sur le mandrin de reprise (12).

3. Système de montage selon l'une des revendications précédentes, **caractérisé en ce que** le poussoir (3) peut être relié à l'appui (11) par un bras de support (30), **en ce que** la position du poussoir (3) sur le bras du support (30) ou la longueur active du bras du support (30) peuvent être modifiées et en particulier accordées au diamètre particulier du bandage (21) de roue de véhicule et/ou **en ce que** le bras du support (30) est monté à rotation sur l'appui (11).

4. Système de montage selon l'une des revendications précédentes, **caractérisé en ce que** le poussoir (3) est cintré pour agir sur le bourrelet du bandage de roue en suivant ce dernier, **en ce qu'**une partie latérale, tournée vers la jante (20), du poussoir (3) est chanfreinée (35) et/ou **en ce qu'**un entraînement électrique, hydraulique, pneumatique ou manuel du poussoir (3) est prévu.

5. Système de montage selon l'une des revendications précédentes, **caractérisé en ce que** l'ensemble de déplacement est formé par une sangle (40) qui peut être tendue en particulier par un ensemble de tension (41), la sangle (40) reposant au moins en partie sur la surface de roulement (25) ou étant serrée le long de la surface de roulement (25) du bandage (21) de roue de véhicule pendant le montage, **en ce que** la position de l'ensemble de serrage (41) sur l'ensemble de montage (1), peut être modifiée en particulier pendant le montage et/ou **en ce que** le système de montage comporte un dispositif de retenue (5) par lequel le bourrelet est maintenu dans le lit (23) pendant le montage.

6. Système de montage selon l'une des revendications précédentes, **caractérisé par** un dispositif de retenue (5) qui immobilise le bourrelet pendant le montage, au moins la partie du dispositif de retenue (5) qui coopère avec le bandage (21) de roue de véhicule étant constituée de matière synthétique ou de caoutchouc.

7. Système de montage selon la revendication 6, **caractérisé en ce que** le dispositif de retenue (5) est configuré comme outil manuel et/ou **en ce que** la partie avant du dispositif de retenue (5) correspond essentiellement ou largement au rayon de la corne de la jante ou au lit de la jante.

8. Procédé de montage d'un bandage de roue de véhicule sur une jante en recourant à un système de montage selon l'une des revendications précédentes, dans lequel
un bandage de roue de véhicule est placé au moins en partie sur la jante (20) avec un bourrelet situé au moins en partie au-dessus de la corne (24) de la jante,
un dispositif d'avancement a pour effet un déplacement relatif dans la direction radiale entre la jante et le bandage de roue de véhicule pour déplacer le bandage de roue de véhicule radialement par rapport à la jante de telle sorte qu'une partie du bourrelet est enfoncée dans le lit de la jante,
la partie du bourrelet encore située en avant de la corne de la jante est ensuite enfoncée dans la jante (20) au-dessus de la corne (24) de la jante par un déplacement (32) parallèle ou formant un angle aigu par rapport à l'axe (22) du bandage de roue, le bandage de roue n'étant pas déplacé en rotation,
**caractérisé en ce que**
pendant ce déplacement, aucun déplacement en arc de cercle ou un déplacement minimal en arc de cercle a lieu.

9. Procédé selon la revendication 8, **caractérisé en ce qu'**une sangle servant d'ensemble de déplacement est disposée au moins le long d'une partie de la surface de roulement et serrée le long de la surface de roulement du bandage de roue de véhicule.

10. Procédé de montage d'un bandage de roue de véhicule sur une jante selon l'une des revendications 8 et 9, **caractérisé par** la succession des étapes ci-dessous :
1. la jante est serrée sur une table de montage,
2. le bourrelet inférieur du bandage de roue est déplacé au moins en partie au-dessus de la corne supérieure de la jante,
3. une sangle est placée sur le bandage de roue et la sangle est serrée,
4. le bourrelet inférieur du bandage de roue est déplacé au moins en partie dans le lit de la jante,
5. le bourrelet inférieur du bandage de roue n'est déplacé au-dessus de la corne de la jante que par un déplacement du poussoir ou une poussée manuelle dans la direction axiale,
6. le bourrelet supérieur du bandage de roue est repoussé au moins en partie en dessous de la corne supérieure de la jante,
7. le dispositif de retenue est placé et éventuellement immobilisé en dessous de la corne de la jante,
8. la sangle est de nouveau placée sur le bandage de roue et la sangle est serrée et
9. le bourrelet du bandage de roue est glissé au-dessus de la corne de la jante par une poussée axiale exercée par exemple à la main ou par un poussoir sur le bourrelet supérieur du bandage de roue encore situé au-dessus de la corne de la jante.

11. Procédé de démontage d'un bandage de roue de véhicule hors d'une jante en recourant à un système de montage selon l'une des revendications 1 à 7, **caractérisé par** la succession des étapes suivantes :
1. le bandage de roue de véhicule est déplacé radialement par rapport à la jante, par exemple en plaçant une sangle le long de la surface de roulement du bandage de roue de véhicule et en la serrant au moins le long d'une partie de la surface de roulement, de sorte qu'une partie du bourrelet est enfoncée dans le lit de la jante,
2. une autre partie du bourrelet est repoussée hors de la jante et au-dessus de la corne de la jante par un déplacement essentiellement parallèle ou formant un angle aigu par rapport à l'axe (22) du bandage de roue ou
1. la roue est serrée sur une table de montage,
2. la sangle est placée sur le bandage de roue et la sangle est serrée,
3. le bourrelet supérieur est repoussé au moins en partie dans le lit de la jante,
4. le bandage de roue est repoussé vers le haut de la jante,
5. le bourrelet supérieur du bandage de roue est déplacé au-dessus de la corne supérieure de la jante,
6. la sangle est serrée autour du bandage de roue,
7. le bourrelet inférieur est déplacé au moins en partie dans le lit de la jante,
8. le bandage de roue est repoussé vers le haut de la jante et
9. le bourrelet inférieur du bandage de roue est déplacé au-dessus de la corne supérieure de la jante.

12. Utilisation d'une sangle pour le montage ou le démontage d'un bandage de roue de véhicule sur une jante à l'aide d'un ensemble selon l'une des revendications 1 à 7.
